# EUROPÄISCHE PATENTSCHRIFT

(11) **EP 1 969 191 B1**
(45) Veröffentlichungstag und Bekanntmachung des Hinweises auf die Patenterteilung: **06.05.2009**
(21) Anmeldenummer: 06828675.6
(22) Anmeldetag: 08.12.2006
(51) Int. Cl.: E03C 1/05

(54) **BERÜHRUNGSLOS BEDIENBARE SANITÄREINRICHTUNG**
TOUCHLESS CONTROL SANITARY INSTALLATION
INSTALLATION SANITAIRE FONCTIONNANT SANS CONTACT

(30) Priorität: 29.12.2005 DE 102005063255
(43) Veröffentlichungstag der Anmeldung: 17.09.2008
(73) Patentinhaber: Fachhochschule Nordhausen, 99734 Nordhausen (DE)
(72) Erfinder: VIEHMANN, Matthias, 06526 Sangerhausen (DE)
(74) Vertreter: Schubert, Klemens
(86) Internationale Anmeldenummer: PCT/DE2006/002244
(87) Internationale Veröffentlichungsnummer: WO 2007/073718

(56) Entgegenhaltungen:
- WO-A-99/57381
- DE-U1- 29 922 956
- US-A- 4 682 728

## Beschreibung

Die Erfindung betrifft eine berührungslos bedienbare Sanitäreinrichtung gemäß dem Oberbegriff des Anspruchs 1. Berührungslos bedienbare Sanitäreinrichtungen sind seit längerem bekannt : siehe z.B. Dokument WO9957381, das dem Oberbegriff des Anspruchs 1 entspricht. Sie werden insbesondere unter dem Gesichtspunkt der Hygiene in öffentlichen Sanitärbereichen aber auch in Badezimmern beziehungsweise Toiletten eingesetzt, deren Einrichtungen einen gehobenen Standard aufweisen. Bei Sanitäreinrichtungen, insbesondere Waschbecken mit berührungslos bedienbaren Armaturen, welche auch als Näherungsarmaturen bezeichnet werden, ist im Bereich der Armatur beziehungsweise des Wasserauslaufs mindestens ein Detektor beziehungsweise Sensor angeordnet, welcher die Anwesenheit und gegebenenfalls die Position der Hand oder der Hände eines Benutzers detektiert. In vielen Fällen erfolgt dabei mittels berührungslos arbeitender Wasserauslassarmaturen lediglich ein Öffnen und Schließen entsprechender Absperrmittel beziehungsweise Ventile in den Wasserzuführungswegen zur Freigabe und zum Absperren des Wassers.

Jedoch sind bereits auch Wasserauslassarmaturen bekannt geworden, bei welchen darüber hinaus die Temperatur des abgegebenen Wassers eingestellt werden kann, wobei bei einigen Ausführungsformen lediglich das An- und Ausstellen des Wassers berührungslos erfolgt, während das Einstellen der Wassertemperatur eine Berührung entsprechender Bedienelemente erfordert.

Aus der DE 85 12 039 U1 ist eine Näherungsarmatur bekannt, welche nicht nur ein berührungsloses Öffnen und Schließen des Wasserauslaufs, sondern auch das berührungslose Einstellen der Temperatur des abgegebenen Wassers ermöglicht. Dazu ist im Bereich des Wasserauslaufs der Armatur eine Vielzahl in mindestens einer waagerechten und einer senkrechten Reihe angeordneter Sensoren vorgesehen. Die Temperatureinstellung des über den Auslauf abgegebenen Wassers erfolgt in Abhängigkeit davon, in welcher Höhe eine die Armatur benutzende Person ihre Hände beim Händewaschen hält. Die in der Druckschrift beschriebene Armatur weist jedoch eine Reihe von Nachteilen auf. So ist zunächst der Aufbau, im Hinblick auf die große Zahl von Sensoren und das Erfordernis, deren Signale mittels einer nachgeschalteten Elektronik auswerten zu müssen, vergleichsweise kompliziert und teuer. Darüber hinaus besteht bei der Einstellung der Temperatur das Problem, dass der Benutzer seine Hände in möglichst konstanter Höhe halten muss, um eine von ihm eingestellte Wassertemperatur für den gesamten Waschvorgang beizubehalten. Abgesehen davon kann, sofern nicht zusätzliche Maßnahmen ergriffen werden, die Gefahr bestehen, dass der Benutzer ungewollt die Temperatur bis auf einen für ihn unangenehmen oder im schlimmsten Fall sogar zu Verbrühungen führenden Wert erhöht. Als nachteilig ist aber nicht nur die Art und Weise der Temperatureinstellung anzusehen, sondern auch die Art des Öffnens und Schließens der Wasserwege. So ist es nicht ausgeschlossen, dass die Armatur zur Abgabe von Wasser bereits geöffnet wird, wenn eine Person an dem Waschbecken vorbeiläuft und dabei in das Sensorfeld der Sensoren gelangt, ohne dass sie die Absicht hat, sich zu waschen. Dies führt jedoch zu einem unnötig erhöhten Wasserverbrauch. Die Art der Betätigung ist aber auch nachteilig im Hinblick auf das Erfordernis einer regelmäßigen Reinigung der Sanitäreinrichtung. Sofern nicht noch ein zusätzlicher genereller An-/Aus-Schalter vorgesehen wird, führen dabei Bewegungen, wie sie beispielsweise beim Auswischen des Waschbeckens ausgeführt werden, unweigerlich immer wieder zu einer ungewollten Wasserabgabe. Dies ist nicht nur von Nachteil im Hinblick auf den Wasserverbrauch, sondern führt auch dazu, dass aufgebrachte beziehungsweise in dem Waschbecken verriebene Reinigungsmittel unter Umständen nicht richtig zur Einwirkung gelangen.

Eine im Hinblick auf die Temperatureinstellung des Wassers günstigere Ausbildungsform einer Sanitäreinrichtung beziehungsweise einer Wasserauslassarmatur ist in der DE 195 39 879 A1 offenbart. Zwar bezieht sich die konkret dargestellte Ausbildungsform der Armatur auf eine berührende Betätigung, jedoch ist die Lösung auch auf eine berührungslose Betätigung übertragbar. Allerdings weist auch die in dieser Schrift offenbarte Wasserauslassarmatur einen verhältnismäßig komplizierten Aufbau auf. Dies ist dadurch bedingt, dass die Armatur ein Ventilregister mit einer Vielzahl elektrisch ansteuerbarer Ventile aufweist, welche mit digitalen Signalen zur Einstellung einer größeren Zahl von Temperaturwerten betätigt werden, so dass sich eine quasi analoge Temperatureinstellkurve ergibt. Die große Zahl erforderlicher Ventile birgt jedoch das Risiko einer erhöhten Störanfälligkeit der Einrichtung und bringt einen Materialaufwand mit sich, welcher zu vergleichsweise hohen Fertigungskosten führt. Zudem lassen sich die Temperaturwerte auch bei größerer Anzahl von Ventilen letztlich immer nur diskret einstellen.

Eine gegenüber den vorstehenden Lösungen verbesserte und vollständig berührungslos arbeitende Sanitärarmatur wird durch die DE 196 51 132 C2 beschrieben. Auch bei der in dieser Schrift beschriebenen Armatur erfolgt die Einstellung der Wassertemperatur in Abhängigkeit von der Position eines zur Bedienung in das Sensorfeld eingebrachten Objektes, vorzugsweise der Hände eines Benutzers. Im Hinblick auf den konstruktiven Aufwand und die Fertigungskosten für die Armaturen ist es dabei vorteilhaft, dass sowohl zur Betätigung der Ein/Aus-Funktion als auch zur Temperatureinstellung lediglich zwei Sensoren an dem Wasserauslauf angeordnet sind. Für die Temperatureinstellung ist das Steuerregime derart, dass nach der Detektion eines Objekts an einer bestimmten Position des Sensorfeldes das Wasser freigegeben oder, sofern das Wasser bereits läuft, dessen Temperatur in Abhängigkeit von der Position eingestellt und für eine vorgegebene Zeitdauer beibehalten wird. Erst nach dem Ablauf dieser Zeitdauer können weitere von dem Sensor detektierte Impulse für eine eventuelle Änderung der Temperatur ausgewertet werden. Allerdings reagiert eine entsprechende Temperatureinstellung, bedingt durch das vorstehend geschilderte Verfahrensregime, recht träge. Dies bedeutet aber, dass gegebenenfalls viel Wasser wegläuft, bevor der Benutzer die von ihm gewünschte Temperatur eingestellt hat. Zudem ist auch die in dieser Schrift dargestellte Armatur als Näherungsarmatur ausgebildet, so dass sie ebenfalls, beispielsweise beim Reinigen des Waschbeckens, ungewollt zur Abgabe von Wasser veranlasst werden kann.

Schließlich ist aus der US 5,577,660 eine Wasserauslassarmatur bekannt, bei welcher zur Einstellung der Wassertemperatur ein in der Kaltwasserleitung und ein in der Warmwasserleitung angeordnetes Ventil mittels eines Mikrocontrollers gesteuert werden. Die Temperatureinstellung erfolgt dabei berührend, wobei es aber insbesondere als nachteilig anzusehen ist, dass die Anordnung mehrere Temperatursensoren aufweist, welche die Ist-Temperatur ermitteln, die durch den Mikrocontroller mit der an einem Einstellmittel vorgegebenen Temperatur zur Ableitung der Steuersignale für die Ventile zu vergleichen ist. In der Praxis ist es jedoch im Allgemeinen so, dass es dem Benutzer lediglich darauf ankommt, die Temperatur einstellen zu können, ohne dass ihn hierbei der tatsächliche Temperaturwert interessiert. Insoweit kann auf eine Temperaturerfassung verzichtet werden und die Steuersignale können, wie auch aus den vorstehend erläuterten Druckschriften teilweise bekannt, unmittelbar zur Temperaturveränderung verwendet werden. Somit weist auch die in der US-Schrift beschriebene Einrichtung einen vergleichsweise unnötig komplizierten und daher teuren Aufbau auf.

Aufgabe der Erfindung ist es, eine berührungslos zu bedienende Sanitäreinrichtung zu schaffen, welche eine komfortable Bedienung sowohl zum Öffnen und Schließen des Wasserauslaufs für die Wasserabgabe als auch zur Einstellung der Temperatur ermöglicht, und dabei die vorstehend genannten Nachteile vermeidet. Insbesondere soll die zu schaffende Einrichtung ein ungewolltes Öffnen der Wasserwege vermeiden und dabei einen einfachen Aufbau besitzen, so dass sie eine geringe Störanfälligkeit aufweist und mit vergleichsweise geringen Fertigungskosten herstellbar ist.

Eine die Aufgabe lösende Sanitäreinrichtung wird durch die Merkmale des Hauptanspruchs beschrieben. Vorteilhafte Aus- beziehungsweise Weiterbildungen der erfindungsgemäßen Sanitäreinrichtung sind durch die Unteransprüche gegeben.

Wie bereits eingangs dargelegt, besteht die Sanitäreinrichtung im Wesentlichen aus einem Wasserauffangbehälter, einer Wasserauslassarmatur, Betätigungsmitteln zur berührungslosen Bedienung und einer elektronischen Steuerung (im Weiteren auch Steuerelektronik). Bei dem Wasserauffangbehälter handelt es sich um ein Waschbecken, eine Badewanne, eine Duschtasse, ein Bidetbecken oder dergleichen mit einem Brauchwasserabfluss. Die Wasserauslassarmatur besteht in an sich bekannter Weise aus einem Wasserauslauf mit einer Auslaufmündung. Vor dem Wasserauslauf sind netzseitig eine Kaltwasserleitung und eine Warmwasserleitung zusammengeführt. In den Wasserleitungen sind Durchflussstellmittel zur Sperrung, Freigabe und Einstellung der Durchflussmenge des durch die Wasserleitungen zum Wasserauslauf fließenden Wassers angeordnet, welche mit Hilfe der berührungslos arbeitenden Betätigungsmittel betätigt werden. Die Betätigungsmittel sind durch zwei berührungslos arbeitende Sensoren oder Sensorgruppen mit zwei sie umgebenden, räumlich voneinander getrennten Sensorfeldern, nämlich je einem Sensorfeld je Sensor oder Sensorgruppe, ausgebildet. Ihre Signale werden durch die Steuerelektronik zur Betätigung der Durchflussstellmittel ausgewertet. Dabei ist eines der beiden Betätigungsmittel dem Durchflussstellmittel in der Kaltwasserleitung und das andere dem Durchflussstellmittel in der Warmwasserleitung funktionell zugeordnet. Im Kontext der Erläuterungen zur Erfindung soll dabei die Formulierung, wonach je eines der Betätigungsmittel je einem Durchflussstellmittel funktionell zugeordnet ist, zum Ausdruck bringen, dass diese Zuordnung nicht räumlich beziehungsweise geometrisch starr gegeben ist, sondern sich auf das funktionelle Zusammenwirken dieser Komponenten bezieht. Nach diesem Verständnis wird ein Durchflussstellmittel, welches bei der Bedienung eines Betätigungsmittels zur Vergrößerung der Durchflussmenge angesteuert wird, diesem Bedienelement als funktionell zugeordnet betrachtet. Dies schließt jedoch, wie noch zu zeigen sein wird, nicht aus, dass eine Bedienung des entsprechenden Betätigungsmittels nicht auch zu einer Ansteuerung des jeweils anderen Durchflussstellmittels führt, wobei eine solche Ansteuerung aber jedenfalls nicht eine Vergrößerung der Durchflussmenge durch dieses andere Durchflussstellmittel bewirkt. Eine Betätigung der Durchflussstellmittel erfolgt, indem zumindest in eines der Sensorfelder ein Objekt, vorzugsweise die Hand einer die Sanitäreinrichtung bedienenden Person, hineinbewegt wird.

Erfindungsgemäß sind die Sensorfelder aufgrund der Anordnung und/oder der Gestaltung beziehungsweise Einstellung der Sensoren oder Sensorgruppen so ausgebildet, dass weder durch das Herantreten einer Person an den Wasserauffangbehälter noch durch ein sich im Bereich der Auslaufmündung des Wasserauslaufs befindendes Objekt eine Betätigung der Durchflussstellmittel erfolgt. Sie sind weiterhin so angeordnet und/oder eingestellt beziehungsweise gestaltet, dass ein bei maximal freigegebener Durchflussmenge in der Kaltwasser- und der Warmwasserleitung aus dem Wasserauslauf austretender Wasserstrahl von den Sensorfeldern nicht durchragt wird. Bei freigegebener Kalt- und/oder Warmwasserleitung, das heißt bei fließendem Wasser, wird erfindungsgemäß eine stufenlose Veränderung der Temperatur des Wassers während des Vorhandenseins eines Objekts in jeweils nur einem der Sensorfelder bewirkt. Dabei wird im Ergebnis der Auswertung des entsprechenden Sensorsignals durch die Steuerelektronik das zugeordnete Durchflussstellmittel zur Vergrößerung der Durchflussmenge des durch die zugehörige Wasserleitung fließenden Wassers und gleichzeitig das jeweils andere Durchflussstellmittel zur Verringerung der Durchflussmenge des durch die andere Wasserleitung fließenden Wassers angesteuert. Das heißt, die in den beiden Wasserleitungen angeordneten Durchflussstellmittel werden gegenläufig beziehungsweise antiparallel betrieben, wobei jedoch die Durchflussmenge des über den Wasserauslauf abgegeben Wassers innerhalb eines durch die Gegebenheiten des Versorgungsnetzes oder der Wasserversorgungsanlage bedingten Toleranzbereichs im Wesentlichen konstant bleibt.

Neben dem letztgenannten Merkmal ist die bereits dargestellte Art der Ausbildung der Sensorfelder als erfindungswesentlich anzusehen. Dabei wird, wie betont, eine Bedienung der Betätigungsmittel weder dadurch bewirkt, dass sich eine Person der Sanitäreinrichtung nähert, noch dass sie ihre Hände unter die Auslaufmündung des Wasserauslaufs hält. Die vorgeschlagene Sanitäreinrichtung beziehungsweise deren Wasserauslassarmatur ist somit nicht als Näherungsarmatur anzusehen. Vielmehr ist ihre Bedienung nur durch ein bewusstes Tun des Nutzers möglich, der vorzugsweise seine Hand bewusst in die entsprechend positionierten Sensorfelder bewegen muss. Die Feststellung, wonach die Sanitäreinrichtung durch eine sich ihr nähernde Person nicht bedient beziehungsweise ihre Bedienelemente nicht aktiviert werden, bezieht sich selbstverständlich auf eine übliche Annäherung an ein Waschbecken oder dergleichen. Selbstverständlich lässt sich durch eine entsprechende Art der Annäherung, beispielsweise durch eine untypisch seitwärts, entlang einer Wand in Richtung des Wasserauffangbehälters erfolgende Bewegung auch eine Bedienung der Einrichtung provozieren. Zu den Möglichkeiten der Ausbildung der Sensorfelder sollen an späterer Stelle noch genauere Ausführungen erfolgen in deren Kontext auch die vorstehende Aussage zu sehen ist.

Gemäß einer bevorzugten Ausbildungsform der Sanitäreinrichtung sind die in den Wasserleitungen angeordneten Durchflussstellmittel als elektrisch betätigte, kontinuierlich einstellbare Ventile ausgebildet. Besonders vorteilhaft ist dabei die Verwendung von Proportionalventilen. Im Hinblick auf den Energieverbrauch sind die Ventile vorzugsweise im stromlosen Zustand gesperrt. Das heißt, die Ventile erfüllen, insbesondere mit Blick auf einen sparsamen Energieverbrauch oder einen eventuellen Ausfall der Spannungsversorgung, primär eine Sperrfunktion.

Zur Öffnung werden die Ventile vorzugsweise durch ein pulsweitenmoduliertes Signal (PWM) angesteuert. Die Sensoren sind vorzugsweise als optische Sensoren ausgebildet.

Soweit die, die Art der Einstellung der Wassertemperatur betreffende Ausbildung der Erfindung bereits dadurch charakterisiert wurde, dass eine Änderung der Wassertemperatur erfolgt, solange sich ein Objekt in einem Sensorfeld, und zwar in nur einem Sensorfeld der Betätigungsmittel befindet, sind für die Bedienung der Sanitäreinrichtung zur Freigabe des Wassers, also zur Öffnung der zuvor gesperrten Wasserleitungen sowie zu deren erneuter Sperrung, unterschiedliche Möglichkeiten gegeben. Entsprechend einer vorgesehenen Ausbildungsform der Erfindung erfolgt die Freigabe der Wasserleitungen zur Abgabe von Wasser über den Wasserauslauf nur, sofern sich gleichzeitig in den beiden voneinander räumlich getrennten Sensorfeldern der Betätigungsmittel je ein Objekt befindet. Das heißt, der Benutzer eines erfindungsgemäß und entsprechend der letztgenannten Ausbildungsform gestalteten Waschbeckens muss beispielsweise beide Hände in je eines der Sensorfelder der Betätigungsmittel bewegen, damit Wasser aus dem Wasserauslauf herausfließt. Eine erneute Sperrung der Wasserleitungen, also eine Beendigung der Wasserabgabe über den Wasserauslauf, erfolgt entsprechend einer Möglichkeit bei der vorstehend beschriebenen Ausbildungsform dadurch, dass sich ebenso wie beim Öffnen der Wasserwege erneut gleichzeitig je ein Objekt in den Sensorfeldern beider Betätigungsmittel befindet respektive in die Sensorfelder hineinbewegt wird. Die vorstehend beschriebene Ausbildungsform ist insbesondere im Hinblick auf die Vermeidung einer ungewollten Wasserabgabe bei einer Reinigung oder Wartung der Sanitäreinrichtung besonders vorteilhaft.

Allerdings ist die zuvor beschriebene Ausführungsform möglicherweise hinsichtlich einer Bedienung durch körperbehinderte Menschen, denen beispielsweise ein Arm fehlt, problematisch. Von der Erfindung ist daher auch eine Ausbildungsform erfasst, bei der die Wasserabgabe dadurch bewirkt werden kann, dass ein Objekt in nur eines der Sensorfelder hineinbewegt wird. Eine Verstellung der Wassertemperatur unter Nutzung desselben zugehörigen Betätigungsmittels ist dann entweder erst nach einer gewissen in der Steuerelektronik voreingestellten Zeitdauer oder nach einem Herausbewegen des Objekts (beispielsweise der Hand) aus dem Sensorfeld und ein erneutes Hineinbewegen in das Sensorfeld möglich, beziehungsweise nachdem sich in dem Sensorfeld des betreffenden Betätigungsmittels vorübergehend kein von dem Sensor oder der Sensorgruppe detektiertes Objekt befunden hat.

Bei beiden vorstehend erläuterten Ausbildungsformen liegen die Durchflussmenge und die Temperatur des nach dem Öffnen der Durchflussstellmittel abgegebenen Wassers innerhalb eines durch die Gegebenheiten des Versorgungsnetzes oder der Wasserversorgungsanlage bedingten Toleranzbereichs bezüglich eines für sie in der Steuerelektronik voreingestellten Wertes. Die erneute Sperrung der Wasserleitungen beziehungsweise die Beendigung der Wasserabgabe erfolgt gemäß einer möglichen Ausgestaltung nach einer ebenfalls in der Steuerelektronik voreingestellten Zeitspanne, innerhalb welcher sich in keinem der Sensorfelder ein Objekt befindet.

Bei einer vorteilhaften Ausbildungsform der erfindungsgemäßen Sanitäreinrichtung weisen die Durchflussstellmittel respektive Ventile eine Schieberrückmeldung auf. Auf der Grundlage einer entsprechenden Rückmeldung wird dabei nach einer Bedienung der Betätigungsmittel der letzte von den Ventilen eingenommene Einstellzustand in der Steuerelektronik gespeichert. Im Falle, dass nun innerhalb einer vorgegebenen Zeitspanne eine erneute Bedienung der Betätigungsmittel zur Freigabe von Wasser erfolgt, werden die Ventile zur Einnahme dieses gespeicherten Einstellwertes angesteuert, während sie bei einer nach dem Ablauf dieser Zeitspanne erfolgenden Bedienung der Betätigungsmittel zur Einnahme des in der Steuerelektronik voreingestellten Standardeinstellwertes angesteuert werden.

Gemäß einer vorteilhaften Weiterbildung der Erfindung ist im Bereich zwischen der Zusammenführung der Warmwasserleitung mit der Kaltwasserleitung und der Auslaufmündung des Wasserauslaufs in den Wasserwegen ein Durchflussmesser angeordnet, dessen Signal ebenfalls durch die Steuerelektronik ausgewertet wird. Dabei regelt die Steuerelektronik die Durchflussstellmittel in beiden Wasserleitungen gleichsinnig nach, sofern die mittels des Durchflussmessers festgestellte Durchflussmenge des über den Wasserauslauf abgegebenen Wassers außerhalb der Toleranz des für sie in der Steuerelektronik voreingestellten Wertes liegt. Entsprechend einer ebenfalls vorgesehenen Weiterbildung ist außerdem im Bereich zwischen der Zusammenführung der Warmwasserleitung mit der Kaltwasserleitung und der Auslaufmündung des Wasserauslaufs oder am Wasserauslauf (gegebenenfalls, bei einem gut wärmeleitenden Auslauf, auch außen am Auslauf) ein Temperatursensor angeordnet, dessen Signal ebenfalls durch die Steuerelektronik ausgewertet wird. Hierbei ist durch den Temperatursensor, die Steuerelektronik und die Durchflussstellmittel in den Wasserleitungen ein Regelkreis gebildet, mittels welchem der zuletzt für das abgegebene Wasser gewählte Temperaturwert, bei weiterhin gleich bleibender Durchflussmenge konstant gehalten wird, solange sich kein Objekt in einem der Sensorfelder befindet. Darüber hinaus kann der Temperatursensor zur Realisierung eines Verbrühungsschutzes genutzt werden. In diesem Fall werden bei einem mittels des Temperatursensors festgestellten Überschreiten eines vorgegebenen Maximalwertes für die Wassertemperatur beide Wasserleitungen aufgrund einer entsprechenden Ansteuerung der in ihnen angeordneten Durchflussmittel durch die Steuerelektronik gesperrt.

Zur Realisierung des grundsätzlichen Erfindungsgedankens, wonach eine Aktivierung der Betätigungsmittel weder durch eine an den Wasserauffangbehälter, beispielsweise ein Waschbecken, herantretende Person noch durch ein sich im Bereich der Wasserauslaufmündung befindendes Objekt erfolgt, sind unterschiedliche Möglichkeiten für die Anordnung der Sensoren und die Ausbildung ihrer Sensorfelder gegeben. Vorzugsweise sind die Sensoren oder Sensorgruppen dabei so angeordnet und ausgebildet beziehungsweise eingestellt, dass ihre Sensorfelder links und rechts des Wasserauslaufs ausgebildet sind und sie bis zu einem seitlichen Abstand von maximal 10 cm von der Außenkontur des Wasserauslaufs sensorisch aktiv sind. Die Sensorfelder weisen dazu vorzugsweise eine sich, ausgehend vom jeweiligen Sensor oder von der jeweiligen Sensorgruppe, keulen- oder kegelartig erweiternde Form auf.

Gemäß einer vorgesehenen Ausbildungsform sind die Sensoren oder Sensorgruppen links und rechts am Wasserauslauf angeordnet, wobei die Sensorfelder zwischen ihren gedachten, dem Wasserauffangbehälter zugewandten Außenflächen einen Winkel von wenigstens 150° einschließen. Die Winkelhalbierende des genannten Winkels fällt dabei vorzugsweise zumindest annähernd mit der Mittelachse des Wasserauslaufs zusammen. Hierdurch ist gewährleistet, dass allenfalls die hinteren Ecken der Öffnung des Wasserauffangbehälters beziehungsweise des Waschbeckens geringfügig von den Sensorfeldern überstrichen werden. Im Zusammenhang mit der vorgesehenen maximalen Länge des sensorisch aktiven Bereichs von 10 cm wird somit, entsprechend dem Grundgedanken der Erfindung, eine Aktivierung der Betätigungsmittel durch das Herantreten an den Wasserauffangbehälter oder ein Bewegen beispielsweise der Hände unter dem Wasserauslauf sicher verhindert. Die gleiche Wirkung wird erreicht, wenn die Sensoren beziehungsweise Sensorgruppen, entsprechend einer weiteren Ausbildungsform, links und rechts des Wasserauslaufs auf einem die Öffnung des Wasserauffangbehälters einschließenden Rand des Wasserauffangbehälters angeordnet sind. Hierbei werden die Sensoren außerdem so angeordnet beziehungsweise ausgebildet, dass zwei Tangenten, welche vom Schnittpunkt einer Verbindungsgeraden zwischen den Sensoren oder Sensorgruppen mit der auf diese Verbindungsgerade projizierten Mittelachse des Wasserauslaufs ausgehen und innerhalb der, der Öffnung des Wasserauffangbehälters zugewandten Bereiche einen Punkt auf der gedachten Außenfläche je eines der Sensorfelder tangieren, einen Winkel von wenigstens 150° einschließen. Die Winkelhalbierende dieses Winkels fällt dabei zumindest annähernd mit der Mittelachse des Wasserauslaufs zusammen. Die Sensorfelder sind zudem so ausgebildet, dass sie sich innerhalb der sensorisch aktiven Abstände der Sensoren oder Sensorgruppen nicht schneiden.

Im Hinblick auf eine Anordnung der Sensoren an dem Wasserauslass ist eine Ausbildungsform besonders bevorzugt, bei welcher die Sensoren oder Sensorgruppen Bestandteil eines vorzugsweise austauschbaren Mündungseinsatzes des Wasserauslaufs sind. Dabei ist der Mündungseinssatz als ein hybrider Mündungseinsatz ausgebildet ist, welcher neben den elektronischen Komponenten, nämlich den Sensoren. auch mechanische Elemente zur Strahlformung aufweist. Bei letzteren handelt es sich, wie auch von Armaturen des Standes der Technik bekannt, beispielsweise um ein Strahlsieb mit spezifisch geformten Durchlassöffnungen oder dergleichen.

Die Erfindung ist vorteilhaft dadurch ausgebildet, dass die Steuerelektronik mindestens eine Schnittstelle zur Konfiguration ihrer elektronischen Funktionen, zur Parametrisierung wesentlicher Größen des austretenden Wasserstrahls und/oder zur Fehlerdiagnose aufweist, über welche ein zur Vornahme entsprechender Einstellungen oder Auswertungen ausgebildetes externes Gerät, ein Service- und Wartungsgerät oder dergleichen, anschließbar ist. Mit Hilfe eines entsprechenden Gerätes kann die Sanitäreinrichtung beispielsweise konfiguriert werden. Vorzugsweise kann mit seiner Hilfe eine Standarddurchflussmenge für das durch die Wasserauslassarmatur abgegebene Wasser oder auch für die Temperatur, mit welcher das Wasser beim Öffnen der Ventile und vor jeglicher durch den Benutzer veranlasster Temperaturänderung aus dem Wasserauslauf strömt, eingestellt werden. Bei Weiterbildungen der Erfindung ermöglicht der in der Sanitäreinrichtung vorzugsweise vorgesehene Mikrocontroller in Interaktion mit einem entsprechenden, an Kontaktierungsmittel der Sanitäreinrichtung angeschlossenen Gerät eine Fehlerdiagnose im Falle des Auftretens von Störungen an der Sanitäreinrichtung. Bei der mit einer Schnittstelle ausgestatteten Ausbildungsform der Sanitäreinrichtung Können als Sensoren oder Sensorgruppen vorteilhaft

Optokoppler mit wenigstens einem optischen Sender und wenigstens einem optischen Empfänger verwendet werden. Unter Nutzung von Modulationsverfahren kann dabei wenigstens einer der Optokoppler gleichzeitig als Koppelelement der Schnittstelle für die Konfiguration beziehungsweise Fehlerdiagnose fungieren. Gegebenenfalls kann zur Kontaktierung der Schnittstelle aber auch eine mit einer Abdeckung versehene Kontakteinheit verwendet werden vorgesehen, welche beispielsweise an der Rückseite des Wasserauslaufs oder unterhalb eines als Waschbecken ausgebildeten Wasserauffangbehälters angeordnet sein kann.

Gemäß einer besonders bevorzugten Ausbildungsform der Erfindung umfasst die Steuerelektronik einen Mikrocontroller, der über eine Schnittstelle zu einem Bussystem oder über einen Netzwerkanschluss verfügt. Eine solchermaßen ausgebildete Sanitäreinrichtung ist, gegebenenfalls mit weiteren Sanitäreinrichtungen gleicher Bauart mit Einheiten eines zentralen Gebäudemanagementsystems verbindbar. Entsprechend einer Weiterbildung, welche für Einrichtungen vorgesehen ist, in denen eine Mehrzahl erfindungsgemäß ausgebildeter Sanitäreinrichtungen installiert ist, verfügt die beziehungsweise verfügen die Sanitäreinrichtungen über einen Busanschluss, über welchen sie an einen Hausbus beziehungsweise an ein Haussystem anschließbar sind. In diesem Falle ist dann auch eine Fernüberwachung im Hinblick auf eventuell auftretende Störungen möglich.

Sofern die Sanitäreinrichtung mit einem Mikrocontroller, einer Schnittstelle und einem Durchflussmesser ausgestattet ist, Können über die Schnittstelle beispielsweise Wasserverbrauchswerte ausgelesen werden, welche von dem Mikrocontroller aus den Signalen des Durchflussmessers gewonnenen werden. Die Verbrauchswerte können gegebenenfalls über unterschiedliche Zeiträume erhoben und nach dem Auslesen statistisch weiterverarbeitet werden. Hierdurch lassen sich Rückschlüsse auf das Wasserverbrauchsverhalten der Benutzer ziehen und andere betriebswirtschaftliche Auswertungen vornehmen. Denkbar ist es aber auch, die Signale des Durchflussmessers dahingehend auszuwerten, dass durch den Mikrocontroller eine Fehlermeldung an das zentrale Gebäudemanagement übertragen wird, sofern beim Öffnen der Durchflussstellmittel ein in der

Steuerelektronik voreingestellter Durchflusswert nicht erreicht wird. Über eine Schnittstelle oder einen Bus- beziehungsweise Netzwerkanschluss kann aber beispielsweise auch mittels eines entsprechenden Gerätes in der Steuerelektronik ein an die Gegebenheiten des Wasserversorgungsnetzes oder der Wasserversorgungsanlage angepasster Proportionalitätsfaktor für die zur Änderung der Temperatur des abgegebenen Wassers erfolgende gegensinnige Verstellung der Durchflussmittel eingestellt oder in einem Speicher hinterlegt werden. Eine durch einen Mikrocontroller ausgebildete Steuerelektronik weist außerdem vorzugsweise einen Speicher auf, in welchem eine update-fähige Firmenware gehalten wird.

Ein gegebenenfalls erforderliches Update erfolgt dabei durch einen Datenaustausch über die vorgesehene Schnittstelle. Gegebenenfalls kann darüber hinaus dem Mikrocontroller ein von ihm als Fehlerspeicher genutzter Speicherbereich zugeordnet sein. In diesem können bei auftretenden Fehlern Fehlerwerte, Fehlercodes beziehungsweise Fehlermeldungen abgelegt werden, welche später mittels eines Servicegeräts über die Schnittstelle ausgelesen werden können.

Die elektrischen und elektronischen Einheiten der Sanitäreinrichtung sind vorzugsweise über ein integriertes Netzteil an die Netzspannung angeschlossen.

Vorteilhafterweise ist dabei die Sanitäreinrichtung hinsichtlich ihrer elektrischen und elektronischen Komponenten modular ausgebildet ist, wobei zum Beispiel ein Modul durch die Steuerelektronik und das Netzteil und ein weiteres durch die Durchflussstellmittel mit den ihnen funktionell zugeordneten Betätigungsmitteln gebildet sein können. Je nach geforderter Funktionalität lassen sich somit gegebenenfalls im Detail unterschiedlich ausgebildete Module kombinieren.

Gemäß einer weiteren Ausgestaltung ist es zudem vorgesehen, dass die elektronischen Einheiten der Sanitäreinrichtung durch die Steuerelektronik in einen Energiesparmodus geschaltet werden, sofern sie für eine in der Steuerelektronik voreingestellte Zeitdauer nicht bedient wird. In diesem Energiesparmodus sind dann im Wesentlichen nur noch die als Betätigungsmittel fungierenden Sensoren aktiv geschaltet.

Von der Erfindung umfasst ist außerdem eine Sanitäreinrichtung, bei welcher der Wasserauffangbehälter und die Wasserauslassarmatur einstückig, das heißt als eine monolithische Einheit ausgebildet sind. Eine entsprechende Ausbildung kommt gegebenenfalls unter Kostengesichtspunkten oder auch aus designerischen Gestaltungsgründen in Betracht.

Wie bereits ausgeführt, können die Steuerelektronik beziehungsweise der Mikrocontroller zur Bereitstellung weiterer Funktionen, wie die Abgabe von Wasch- und/oder Pflegemittel oder das Öffnen und Schließen eines Stöpsels für eine Ausflussöffnung des Wasserauffangbehälters, durch eine berührungslose Betätigung ausgelegt beziehungsweise eingerichtet sein. Gegebenenfalls sind zu diesem Zweck auch weitere Betätigungsmittel an der Sanitäreinrichtung vorgesehen, wobei deren Sensorfelder dann vorzugsweise ebenfalls so angeordnet und/oder ausgebildet sind, dass die jeweilige Funktion ebenfalls weder durch das Herantreten einer Person an den Wasserauffangbehälter noch durch ein sich im Bereich der Auslaufmündung der Wasserauslassarmatur befindendes Objekt aktiviert wird.

Die Erfindung soll nachfolgend anhand von Ausführungsbeispielen nochmals erläutert werden. In den zugehörigen Zeichnungen zeigen:
- Fig. 1:: Eine erfindungsgemäße Sanitäreinrichtung in Form eines Waschbeckens mit einer beispielhaften Ausbildung der Sensorfelder der Bedienelemente
- Fig. 2:: Eine gegenüber der Fig. 1 im Hinblick auf die Ausbildung der Sensorfelder modifizierte Ausbildungsform
- Fig. 3a bis 3c:: Den Bedienvorgang für eine mögliche Ausbildungsform der Erfindung.

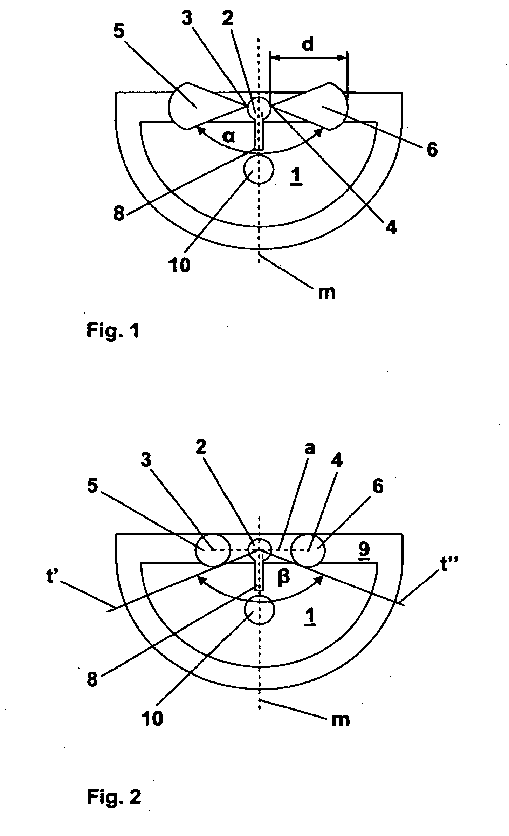

In der Fig. 1 ist skizzenhaft eine mögliche Ausbildungsform der erfindungsgemäßen Sanitäreinrichtung dargestellt. Diese umfasst einen Wasserauffangbehälter 1, zwei Betätigungsmittel 3, 4, eine Wasserauslassarmatur und eine nicht gezeigte Steuerelektronik. Bei dem Wasserauffangbehälter 1 handelt es sich gemäß dem dargestellten Beispiel um ein Handwaschbecken. Betreffend die Wasserauslassarmatur ist in der Zeichnung nur deren Wasserauslauf 2 mit der Auslaufmündung 8 erkennbar. Vor dem Wasserauslauf 2 sind netzseitig eine nicht dargestellte Kaltwasserleitung und eine ebenfalls nicht gezeigte Warmwasserleitung zusammengeführt. In den Wasserleitungen sind ebenfalls nicht dargestellte Durchflussstellmittel, vorzugsweise ein Ventil in jeder Leitung, angeordnet, welche mit Hilfe der Betätigungsmittel 3, 4 bedient werden.

Bei der in der Fig. 1 gezeigten Ausbildungsform sind die Betätigungsmittel 3, 4 in Form optischer Sensoren, genauer in Form je eines Optokopplers, an beiden Seiten des Wasserauslaufs 2 angeordnet. Beide Optokoppler 3, 4 umfassen einen optischen Sender beziehungsweise Emitter (LED) und einen an die emittierte Strahlung angepassten optischen Empfänger (Photodiode). Sofern sich ein Objekt 7 in dem, hinsichtlich seiner Form im Wesentlichen durch die Abstrahlcharakteristik des Senders und die empfangsaktive Geometrie des Empfängers bestimmten Sensorfeld 5, 6 eines Sensors 3, 4 befindet, wird die von dessen Sender emittierte Strahlung durch das betreffende Objekt 7 reflektiert und ein Empfangssignal an dem, mit dem Sender zum Koppler vereinigten Empfänger registriert. Dabei beträgt der seitliche Abstand von der Außenkontur des Wasserauslaufs 2, bis zu dem die Sensoren 3, 4 auf ein Objekt 7 reagieren, 5 cm bis 10 cm, jedenfalls aber vorzugsweise maximal 10cm. Die Sensorfelder 5, 6 der Sensoren 3, 4 beziehungsweise deren Hüllkurven sind im Wesentlichen in der Form eines Kegels oder einer Keule ausgebildet, dessen beziehungsweise deren Spitze sich auf der Sensoroberfläche befindet. Dabei sind die Sensoren 3, 4 so platziert und gestaltet, dass die kegel- oder keulenförmigen Sensorfelder 5, 6 sich im Bereich der rückseitigen Begrenzung des Waschbeckens 1 erstrecken und die Waschbeckenöffnung im Wesentlichen nicht überstreichen. Durch eine sich dem Waschbecken 1 von vorne nähernde Person erfolgt daher keine Betätigung der Betätigungsmittel 3, 4. Auch ein Bewegen der Hände 7 unter die Auslaufmündung 8 des Wasserauslaufs 2 führt nicht zu einer Bedienung der Sanitäreinrichtung. Hierzu ist es vielmehr erforderlich, die Hand 7 in zumindest eines der hinsichtlich ihrer Form in der Skizze angedeuteten Sensorfelder 5, 6 zu bewegen, also eine Betätigung der Betätigungsmittel 3, 4 bewusst zu veranlassen. Bei fließendem Wasser wird dessen Temperatur beispielsweise erhöht, solange sich ein Objekt 7 in dem Sensorfeld 5 des linken Betätigungsmittels 3 befindet. Umgekehrt wird die Temperatur verringert, solange sich ein Objekt im Sensorfeld 6 des rechts an der Seite des Wasserauslaufs 2 angeordneten Sensors 4 befindet. Sofern sich in beiden Sensorfeldern 5, 6 ein Objekt befindet, wird die augenblickliche Wassertemperatur nicht verändert. Die Sensorsignale der Sensoren 3, 4 werden durch die nicht gezeigte Steuerelektronik so ausgewertet, dass das Durchflussstellmittel, welches dem Sensor funktionell zugeordnet ist, in dessen Sensorfeld 5, 6 sich ein Objekt 7 befindet, zur Vergrößerung der Durchflussmenge durch die entsprechende Wasserleitung angesteuert wird, während gleichzeitig das andere Durchflussstellmittel, quasi gegenphasig, zur Verringerung des Durchflusses in der anderen Wasserleitung angesteuert wird.

Die Steuerung ist dabei derart, dass die Gesamtdurchflussmenge des aus der Auslaufmündung 8 heraus fließenden Wassers weitgehend konstant bleibt. Gegebenenfalls kann die Sanitäreinrichtung auch noch einen im Wasserauslauf 2 angeordneten Durchflusssensor aufweisen, so dass auf der Grundlage der Signale dieses Durchflussmessers durch die Steuerelektronik eventuelle netzseitige Druckschwankungen ausgeglichen werden können.

Die Fig. 2 zeigt eine mit der Fig. 1 vergleichbare Ausbildungsform. Jedoch sind hier die Betätigungselemente 3, 4 beziehungsweise die Sensoren neben dem Wasserauslauf 2 der Wasserauslassarmatur auf dem Beckenrand 9 angeordnet. Auch durch diese Sensoren 3, 4 werden kegelförmige Sensorfelder 5, 6, als Sensorfelder 5, 6 mit einem, wie in der Fig. gezeigten, annähernd kreisförmigen Querschnitt, ausgebildet. Der Bereich oberhalb der Beckenöffnung bleibt durch die Sensorfelder 5, 6 zumindest innerhalb des Empfindlichkeitsbereiches der Sensoren 3, 4 weitgehend unberührt, so dass durch ein über die Beckenöffnung bewegtes Objekt 7, beispielsweise die Hand 7 eines Benutzers, keine Bedienung erfolgt. Vielmehr erfolgt eine Bedienung auch hier erst dann, wenn die Hände 7 in die Nähe der rückseitigen Begrenzung der Waschbeckenöffnung bewegt werden.

Im Hinblick darauf, dass die Linsen der die Optokoppler 3, 4 ausbildenden Elemente (LED und Photodiode) bei dieser Ausbildungsform aufgrund ihrer waagerechten Anordnung möglicherweise leichter verschmutzen ist jedoch der Ausbildungsform nach der Fig. 1 wohl der Vorzug zu geben.

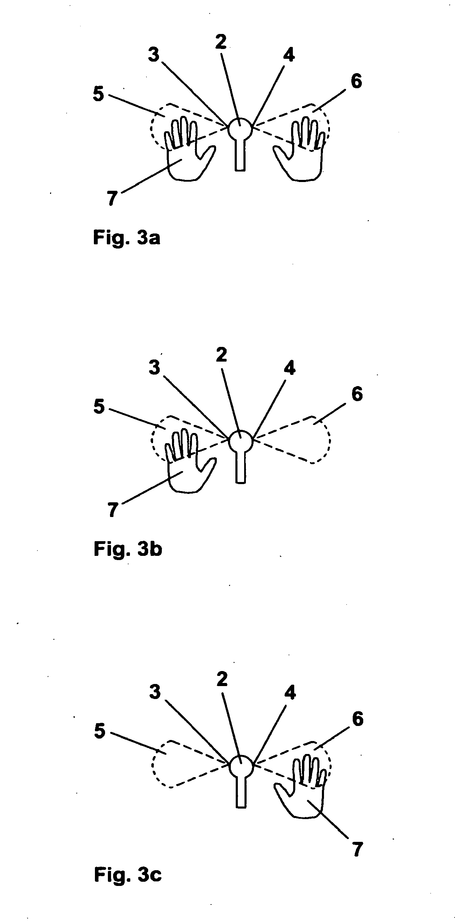

In den Fig. 3a bis 3c ist beispielhaft ein mögliches Bedienschema angedeutet.

Danach erfolgt gemäß Fig. 3a die Freigabe von Wasser dadurch, dass ein Benutzer beide Hände 7 gleichzeitig in je eines der Sensorfelder bewegt. Bei laufendem Wasser ist gemäß Fig. 3b eine Erhöhung der Wassertemperatur durch eine Bewegung der linken Hand 7 in das linke Sensorfeld 5 möglich, während eine in das Sensorfeld 6 des rechten Sensors 4 bewegte Hand 7 zu einer Verringerung der Wassertemperatur führt, wobei eine Veränderung der Temperatur immer für die Dauer der Anwesenheit einer Hand 7 in dem Sensorfeld 5, 6 nur eines Sensors 3, 4 erfolgt und die jeweils gegebene Temperatur durch den Benutzer mit seiner jeweils anderen Hand am Wasserauslauf 2 erfühlt werden kann. Entsprechend einer Weiterbildung der Erfindung kann im Bereich der Auslaufmündung 8 des Wasserauslaufs 2 ein Temperatursensor vorgesehen sein, dessen Signale ebenfalls durch die Steuerelektronik dahingehend ausgewertet werden, dass beim Überschreiten einer Maximaltemperatur, bei welcher Verbrühungsgefahr besteht, der Wasserauslauf 2 durch Absperren beider Durchflussstellmittels in den Wasserleitungen sofort verriegelt wird. Gegebenenfalls kann der Temperatursensor auch dazu genutzt werden, eine auf die vorstehend beschriebene Weise gewählte Temperatur gegenüber netzseitigen Schwankungen der Wassertemperatur oder eines, ebenfalls zur Veränderung der Temperatur am Auslauf führenden Schwankens des Wasserdrucks durch eine Betätigung des beziehungsweise der Durchflussstellmittel in einer oder beiden Wasserleitungen konstant zu halten. Dabei orientiert sich die Regelung demnach nicht an einer vom Benutzer bewusst wertmäßig eingestellten Temperatur, sondern der Mikrocontroller übernimmt quasi die vom Benutzer erfühlte und dann mittels des Temperatursensors erfasste Temperatur als Sollwert für die Regelung. Das Absperren der Wasserwege beziehungsweise die Beendigung der Wasserabgabe erfolgt entsprechend dem hier dargestellten Beispiel, indem der Benutzer erneut beide Hände 7 gemäß Fig. 3a in den sensorisch aktiven Bereich beziehungsweise die Sensorfelder 5, 6 beider, rechts und links an des Wasserauslaufs 2 angeordneter Sensoren oder Sensorgruppen 3, 4 bewegt.

Liste der verwendeten Bezugszeichen
- 1: Wasserauffangbehälter (z. B. Waschbecken)
- 2: Wasserauslauf
- 3, 4: Betätigungsmittel, Sensor (z. B. optischer Sensor bzw. Optokoppler)
- 5, 6: Sensorfelder
- 8: Auslaufmündung
- 9: Rand, Beckenrand
- 10: Brauchwasserabfluss

- a: Verbindungsgerade
- m: Mittelachse
- t, t': Tangente
- α: Winkel
- β: Winkel

## Patentansprüche

1. Sanitäreinrichtung, bestehend aus einem Wasserauffangbehälter(1) in Form eines Waschbeckens, einer Badewanne, einer Duschtasse oder eines Bidetbeckens mit einem Brauchwasserabfluss (10), aus einer zugehörigen Wasserauslassarmatur, mit einem Wasserauslauf (2), vor welchem eine Kaltwasserleitung und eine Warmwasserleitung des Wasserversorgungsnetzes oder einer Wasserversorgungsanlage zusammengeführt sind und mit in den Wasserleitungen angeordneten Durchflussstellmitteln zur Sperrung, Freigabe und Einstellung der Durchflussmenge des durch die Wasserleitungen zum Wasserauslauf fließenden Wassers, aus Mitteln (3, 4) zur Betätigung der Durchflussstellmittel, welche durch zwei Betätigungsmittel in Form berührungslos arbeitender Sensoren oder Sensorgruppen (3, 4) mit zwei sie umgebenden, räumlich voneinander getrennten Sensorfeldern (5, 6), nämlich je einem Sensorfeld (5, 6) je Sensor oder Sensorgruppe (3, 4), ausgebildet sind, und aus einer Steuerelektronik, welche die Signale der Sensoren zur Betätigung der Durchflussstellmittel auswertet, wobei ein Betätigungsmittel (3, 4) dem Durchflussstellmittel in der Kaltwasserleitung und ein Betätigungsmittel (3, 4) dem Durchflussstellmittel in der Warmwasserleitung funktionell zugeordnet ist und eine Betätigung der Durchflussstellmittel erfolgt, indem zumindest in eines der Sensorfelder (5, 6) ein Objekt (7), vorzugsweise die Hand eines Menschen, hinein bewegt wird, wobei die Sensorfelder (5,6) aufgrund der Anordnung und/oder der Art und Einstellung der Sensoren oder Sensorgruppen (3,4) so ausgebildet sind, dass durch das Herantreten einer Person an den Wasserauffangbehälter (1) eine Betätigung der Durchflussstellmittel nicht erfolgt, und dass bei für den Durchfluss freigegebener Kalt- und/oder Warmwasserleitung eine stufenlose Veränderung der Temperatur während des Vorhandenseins eines Objekts (7) in jeweils nur einem der Sensorfelder (5,6) bewirkt wird, indem im Ergebnis der Auswertung des entsprechenden Sensorsignals durch die Steuerelektronik das funktionell zugeordnete Durchflussstellmittel zur Vergrößerung der Durchflussmenge des durch die zugehörige Wasserleitung fließenden Wassers und gleichzeitig das jeweils andere Durchflussstellmittel zur Verringerung der Durchflussmenge des durch die andere Wasserleitung fließenden Wassers angesteuert wird,
**dadurch gekennzeichnet, daß** die Sensorfelder (5,6) aufgrund der Anordnung und/oder der Art und Einstellung der Sensoren oder Sensorgruppen so ausgebildet sind, dass durch ein sich im Bereich einer Auslaufmündung (8) des Wasserauslaufs befindendes Objekts (7) eine Betätigung der Durchflussstellmittel nicht erfolgt, und ein bei maximal freigegebener Durchflussmenge aus dem Wasserauslauf (2) austretender Wasserstrahl nicht von den Sensorfeldern (5,6) durchragt wird, und wobei die Durchflussmenge des über den Wasserauslauf (2) abgegeben Wassers innerhalb eines durch die Gegebenheiten des Versorgungsnetzes oder der Wasserversorgungsanlage bedingten Toleranzbereichs konstant bleibt.

2. Sanitäreinrichtung nach Anspruch 1, **dadurch gekennzeichnet, dass** die Durchflussstellmittel durch zwei elektrisch betätigte, kontinuierlich einstellbare Ventile ausgebildet sind.

3. Sanitäreinrichtung nach Anspruch 1 oder 2, **dadurch gekennzeichnet, dass** es sich bei den Sensoren (3, 4) um optische Sensoren handelt.

4. Sanitäreinrichtung nach einem der Ansprüche 1 bis 3, **dadurch gekennzeichnet, dass** bei abgesperrter Kalt- und Warmwasserleitung deren Freigabe zur Wasserabgabe über den Wasserauslauf (2) erfolgt, sofern sich gleichzeitig je ein Objekt (7) in den Sensorfeldern (5, 6) beider Betätigungsmittel (3, 4) befindet, wobei die Durchflussstellmittel von der Steuerelektronik für die Freigabe des Wassers zur Einnahme eines Standardeinstellwertes angesteuert werden und wobei die Durchflussmenge und die Temperatur des abgegebenen Wassers innerhalb eines durch die Gegebenheiten des Versorgungsnetzes oder der Wasserversorgungsanlage bedingten Toleranzbereichs bezüglich eines für sie in der Steuerelektronik voreingestellten Wertes liegen.

5. Sanitäreinrichtung nach Anspruch 4, **dadurch gekennzeichnet, dass** die für den Durchfluss freigegebenen Wasserleitungen wieder gesperrt werden, sofern erneut gleichzeitig je ein Objekt (7) in die Sensorfelder (5, 6) beider Betätigungsmittel (3, 4) bewegt wird.

6. Sanitäreinrichtung nach einem der Ansprüche 1 bis 3, **dadurch gekennzeichnet, dass** bei abgesperrter Kalt- und Warmwasserleitung deren Freigabe zur Wasserabgabe über den Wasserauslauf (2) erfolgt, indem ein Objekt (7) in das Sensorfeld (5, 6) eines der Betätigungsmittel (3, 4) bewegt wird, wobei die Durchflussmenge und die Temperatur des abgegebenen Wassers innerhalb eines durch die Gegebenheiten des Versorgungsnetzes oder der Wasserversorgungsanlage bedingten Toleranzbereichs bezüglich eines für sie in der Steuerelektronik voreingestellten Wertes liegen und wobei eine Änderung der Wassertemperatur mittels des zur Freigabe der Wasserleitungen genutzten Betätigungsmittels (3, 4) erst nach dem Ablauf einer in der Steuerelektronik voreingestellten Zeitspanne nach der Freigabe der Wasserleitungen zur Wasserabgabe möglich ist oder nachdem sich in dem Sensorfeld (5, 6) des betreffenden Betätigungsmittels (3, 4) vorübergehend kein von dem Sensor oder der Sensorgruppe (3, 4) detektiertes Objekt (7) befunden hat.

7. Sanitäreinrichtung nach einem der Ansprüche 4 bis 6, **dadurch gekennzeichnet, dass** die für den Durchfluss freigegebenen Wasserleitungen nach einer in der Steuerelektronik voreingestellten Zeitspanne, innerhalb welcher sich in keinem der Sensorfelder (5, 6) ein Objekt (7) befindet, wieder gesperrt werden.

8. Sanitäreinrichtung nach einem der Ansprüche 2 bis 7, **dadurch gekennzeichnet, dass** die Ventile eine Schieberrückmeldung aufweisen, auf deren Grundlage ihr letzter nach einer Bedienung der Betätigungsmittel (3,4) eingenommener Einstellzustand in der Steuerelektronik gespeichert wird, so dass, im Falle einer innerhalb einer vorgegebenen Zeitspanne erfolgenden erneuten Bedienung der Betätigungsmittel (3, 4) zur Freigabe von Wasser, die Ventile zur Einnahme dieses Einstellwertes angesteuert werden, während sie bei einer nach dem Ablauf dieser Zeitspanne erfolgenden Bedienung der Betätigungsmittel (3, 4) zur Einnahme des Standardeinstellwertes angesteuert werden.

9. Sanitäreinrichtung nach Anspruch 4 oder 6, **dadurch gekennzeichnet, dass** im Bereich zwischen der Zusammenführung der Warmwasserleitung mit der Kaltwasserleitung und der Auslaufmündung (8) des Wasserauslaufs (2) ein Durchflussmesser angeordnet ist, dessen Signal durch die Steuerelektronik ausgewertet wird, wobei ein Regelkreis gebildet ist, über den die Durchflussstellmittel in beiden Wasserleitungen gleichsinnig nachregelt werden, sofern die Durchflussmenge des über den Wasserauslauf (2) abgegebenen Wassers außerhalb der Toleranz des für sie in der Steuerelektronik voreingestellten Wertes liegt.

10. Sanitäreinrichtung nach einem der Ansprüche 4 bis 9, **dadurch gekennzeichnet, dass** im Bereich zwischen der Zusammenführung der Warmwasserleitung mit der Kaltwasserleitung und der Auslaufmündung (8) des Wasserauslaufs (2) oder am Wasserauslauf (2) ein Temperatursensor angeordnet ist, dessen Signal durch die Steuerelektronik ausgewertet wird, wobei durch den Temperatursensor und die Steuerelektronik ein Regelkreis gebildet ist, mittels welchem, bei weiterhin konstanter Durchflussmenge, der zuletzt für das abgegebene Wasser gewählte Temperaturwert konstant gehalten wird, so lange sich kein Objekt (7) in einem der Sensorfelder (5, 6) befindet.

11. Sanitäreinrichtung nach Anspruch 10, **dadurch gekennzeichnet, dass** im Falle des mittels des Temperatursensors festgestellten Überschreitens eines vorgegebenen Maximalwertes für die Wassertemperatur die Wasserleitungen aufgrund einer entsprechenden Ansteuerung der in ihnen angeordneten Durchflussstellmittel durch die Steuerelektronik gesperrt werden.

12. Sanitäreinrichtung nach einem der Ansprüche 1 bis 11, **dadurch gekennzeichnet, dass** die Sensorfelder (5,6) links und rechts des Wasserauslaufs (2) ausgebildet sind und die Sensoren oder Sensorgruppen (3, 4) so angeordnet, ausgebildet und/oder eingestellt sind, dass sie bis zu einem seitlichen Abstand (d) von maximal 10 cm von der Außenkontur des Wasserauslaufs (2) sensorisch aktiv sind, wobei die Sensorfelder (5, 6) sich, ausgehend vom jeweiligen Sensor oder von der jeweiligen Sensorgruppe (3, 4), keulen- oder kegelförmig erweitern.

13. Sanitäreinrichtung nach Anspruch 1 oder 12, **dadurch gekennzeichnet, dass** die Sensoren oder Sensorgruppen (3, 4) links und rechts am Wasserauslauf (2) angeordnet sind, wobei die Sensorfelder (5, 6) zwischen den der Öffnung des Wasserauffangbehälters (1) zugewandten Bereichen ihrer gedachten Außenflächen einen Winkel (α) von wenigstens 150° einschließen, dessen Winkelhalbierende zumindest annähernd mit der Mittelachse (m) des Wasserauslaufs (2) zusammenfällt.

14. Sanitäreinrichtung nach Anspruch 13, **dadurch gekennzeichnet, dass** die Sensoren oder Sensorgruppen (3, 4) Bestandteil eines Mündungseinsatzes des Wasserauslaufs (2) sind, wobei der Mündungseinssatz als ein hybrider Mündungseinsatz ausgebildet ist, welcher neben den elektronischen Komponenten, in Form der Sensoren (3, 4), auch mechanische Elemente zur Formgebung des aus dem Wasserauslass (2) austretenden Wasserstrahls aufweist.

15. Sanitäreinrichtung nach Anspruch 1 oder 12, **dadurch gekennzeichnet, dass** die Sensoren oder Sensorgruppen (3, 4) links und rechts des Wasserauslaufs (2) auf einem die Öffnung des Wasserauffangbehälters (1) einschließenden Rand (9) des Wasserauffangbehälters (1) angeordnet sind und dass zwei Tangenten (t', t"), welche vom Schnittpunkt einer Verbindungsgeraden (a) zwischen den Sensoren oder Sensorgruppen (3, 4) mit der auf diese Verbindungsgerade (a) projizierten Mittelachse (m) des Wasserauslaufs (2) ausgehen und innerhalb der, der Öffnung des Wasserauffangbehälters (1) zugewandten Bereiche einen Punkt auf der gedachten Außenfläche je eines der Sensorfelder (5, 6) tangieren, einen Winkel (β) von wenigstens 150° einschließen, dessen Winkelhalbierende zumindest annähernd mit der Mittelachse (m) des Wasserauslaufs (2) zusammenfällt, wobei die Sensorfelder (5, 6) sich innerhalb der sensorisch aktiven Abstände der Sensoren oder Sensorgruppen (3, 4) nicht schneiden.

16. Sanitäreinrichtung nach einem der Ansprüche 1 bis 15, **dadurch gekennzeichnet, dass** die Steuerelektronik mindestens eine Schnittstelle zur Konfiguration ihrer elektronischen Funktionen, zur Parametrisierung, und/oder zur Fehlerdiagnose mittels dafür ausgebildeter externer Geräte aufweist.

17. Sanitäreinrichtung nach einem der Ansprüche 1 bis 16, **dadurch gekennzeichnet, dass** die Steuerelektronik durch einen Mikrocontroller ausgebildet ist, der über eine Schnittstelle zu einem Bussystem oder über einen Netzwerkanschluss verfügt, über welches beziehungsweise welchen die Sanitäreinrichtung und gegebenenfalls weitere gleichartige Sanitäreinrichtung mit Einheiten eines zentralen Gebäudemanagementsystems verbindbar sind.

18. Sanitäreinrichtung nach einem der Ansprüche 1 bis 17, **dadurch gekennzeichnet, dass** deren elektronische Einheiten durch die Steuerelektronik in einen Energiesparmodus geschaltet werden, sofern die Sanitäreinrichtung für eine in der Steuerelektronik voreingestellte Zeitdauer nicht bedient wird, wobei in diesem Energiesparmodus im Wesentlichen nur noch die als Betätigungsmittel fungierenden Sensoren (3, 4) aktiv geschaltet sind.

19. Sanitäreinrichtung nach einem der Ansprüche 1 bis 18, **dadurch gekennzeichnet, dass** der Wasserauffangbehälter (1) und die Wasserauslassarmatur eine monolithische Einheit ausbilden.

## Claims

1. Sanitary facility consisting of a water receiving container (1) in the form of a washbasin, a bath tub, a shower tray or a bidet basin, with a greywater drain (10); of an associated water outlet fitting with a water outlet (2), in front of which a cold water pipe and a hot water pipe of the water supply network or a water supply system are brought together, and with flow rate setting means which are arranged in the water pipes for blocking, releasing and setting the flow rate of the water flowing through the water pipes to the water outlet; of means (3, 4) of operating the flow rate setting means, said means being in the form of two operating means in the form of sensors or sensor groups (3, 4) which work without contact, with two sensor fields (5, 6) which surround them and are spatially separated from each other, that is one sensor field (5, 6) for each sensor or sensor group (3, 4); and of control electronics which evaluate the signals of the sensors for operating the flow rate setting means; wherein one operating means (3, 4) is functionally assigned to the flow rate setting means in the cold water pipe and one operating means (3, 4) is functionally assigned to the flow rate setting means in the hot water pipe, and the flow rate setting means are operated by an object (7), preferably a human hand, being moved into at least one of the sensor fields (5, 6); the sensor fields (5, 6), because of the arrangement and/or type and setting of the sensors or sensor groups (3, 4), being in such a form that the flow rate setting means are not operated by a person entering the water receiving container (1), and that if a cold and/or hot water pipe is released for the flow, a continuously variable change of the temperature is caused during the presence of an object (7) in only one of the sensor fields (5, 6) by, as the result of the evaluation of the corresponding control signal by the control electronics, the functionally assigned flow rate setting means being controlled to enlarge the flow rate of the water flowing through the assigned water pipe, and simultaneously the other flow rate setting means being controlled to reduce the flow rate of the water flowing through the other water pipe; **characterized in that** the sensor fields (5, 6), because of the arrangement and/or type and setting of the sensors or sensor groups, are in such a form that the flow rate setting means are not operated by an object (7) in the region of an outlet opening (8) of the water outlet, and a water jet escaping from the water outlet (2) at a maximally released flow rate is not penetrated by the sensor fields (5, 6); and the flow rate of the water supplied via the water outlet (2) remaining constant within a tolerance range depending on the conditions of the supply network or water supply system.

2. Sanitary facility according to Claim 1, **characterized**
**in that** the flow rate setting means are in the form of two electrically operated, continuously adjustable valves.

3. Sanitary facility according to Claim 1 or 2, **characterized in that** the sensors (3, 4) are optical sensors.

4. Sanitary facility according to one of Claims 1 to 3, **characterized in that** if the cold and hot water pipes are blocked, they are released to supply water via the water outlet (2) if an object (7) is in the sensor fields (5, 6) of both operating means (3, 4) simultaneously, the flow rate setting means being controlled by the control electronics for releasing water to take a standard setting value, and the flow rate and temperature of the supplied water being within a tolerance range depending on the conditions of the supply network or water supply system, with reference to a value which is preset for them in the control electronics.

5. Sanitary facility according to Claim 4, **characterized**
**in that** the water pipes which are released for the flow are blocked again if an object (7) is moved again into the sensor fields (5, 6) of both operating means (3, 4) simultaneously.

6. Sanitary facility according to one of Claims 1 to 3, **characterized in that** if the cold and hot water pipes are blocked, they are released to supply water via the water outlet (2) if an object (7) is moved into the sensor field (5, 6) of one of the operating means (3, 4), the flow rate setting means and temperature of the supplied water being within a tolerance range depending on the conditions of the supply network or water supply system, with reference to a value which is preset for them in the control electronics, and a change of the water temperature being possible by means of the operating means (3, 4), which are used to release the water pipes, only after the expiry of a time span, which is preset in the control electronics, after the release of the water pipes to supply water, or after no object (7) detected by the sensor or sensor group (3, 4) momentarily has been in the sensor field (5, 6) of the relevant operating means (3, 4).

7. Sanitary facility according to one of Claims 4 to 6, **characterized in that** the water pipes which are released for the flow are blocked again after a time span, which is preset in the control electronics, within which there is no object (7) in any of the sensor fields (5, 6).

8. Sanitary facility according to one of Claims 2 to 7, **characterized in that** the valves have gate valve feedback, on the basis of which their last setting state which was taken before operation of the operating means (3, 4) is stored in the control electronics, so that in the case of repeated operation of the operating means (3, 4) within a preset time span to release water, the valves are controlled to take this setting value, whereas in the case of operation of the operating means (3, 4) after the expiry of this time span, they are controlled to take the standard setting value.

9. Sanitary facility according to Claim 4 or 6, **characterized in that** in the region between where the hot water pipe is brought together with the cold water pipe and the outlet opening (8) of the water outlet (2), a flow meter is arranged, and its signal is evaluated by the control electronics, a control loop, via which the flow rate setting means in both water pipes are readjusted in the same direction if the flow rate of the water supplied via the water outlet (2) is outside the tolerance of the value which is preset for it in the control electronics, being formed.

10. Sanitary facility according to one of Claims 4 to 9, **characterized in that** in the region between where the hot water pipe is brought together with the cold water pipe and the outlet opening (8) of the water outlet (2), or on the water outlet (2), a temperature sensor is arranged, and its signal is evaluated by the control electronics, a control loop, by means of which, with the flow rate remaining constant, the temperature value which was last chosen for the supplied water is kept constant as long as there is no object (7) in one of the sensor fields (5, 6), being formed by the temperature sensor and control electronics.

11. Sanitary facility according to Claim 10, **characterized in that in the case that** a preset maximum value for the water temperature is exceeded, as established by means of the temperature sensor, the water pipes are blocked because of a corresponding control by the control electronics of the flow rate setting means arranged in them.

12. Sanitary facility according to one of Claims 1 to 11, **characterized in that** the sensor fields (5, 6) are formed to the left and right of the water outlet (2), and the sensors or sensor groups (3, 4) are arranged, formed and/or set so that they are active as sensors as far as a lateral distance (d) of a maximum of 10 cm from the outer contour of the water outlet (2), the sensor fields (5, 6) extending in the form of lobes or cones starting from the appropriate sensor or sensor group (3, 4).

13. Sanitary facility according to Claim 1 or 12, **characterized in that** the sensors or sensor groups (3, 4) are arranged to the left and right of the water outlet (2), the sensor fields (5, 6) enclosing between those areas of their imaginary outer surfaces which face the opening of the water receiving container (1) an angle (α) of at least 150°, the bisector of which coincides at least approximately with the middle axis (m) of the water outlet (2).

14. Sanitary facility according to Claim 13, **characterized in that** the sensors or sensor groups (3, 4) are part of an opening insert of the water outlet (2), the opening insert being in the form of a hybrid opening insert, which has, in addition to the electronic components in the form of sensors (3, 4), mechanical elements to shape the water jet leaving the water outlet (2) .

15. Sanitary facility according to Claim 1 or 12, **characterized in that** the sensors or sensor groups (3, 4) to the left and right of the water outlet (2) are arranged on an edge (9) of the water receiving container (1) surrounding the opening of the water receiving container (1), and that two tangents (t', t''), which start from the intersection point of a connecting straight line (a) between the sensors or sensor groups (3, 4) and the middle axis (m), projected onto this connecting straight line (a), of the water outlet (2), and within the areas facing the opening of the water receiving container (1) are tangential to a point on the imaginary outer surfaces of each of the sensor fields (5, 6), enclose an angle (β) of at least 150°, the bisector of which coincides at least approximately with the middle axis (m) of the water outlet (2), the sensor fields (5, 6) not intersecting within the sensorily active distances of the sensors or sensor groups (3, 4).

16. Sanitary facility according to one of Claims 1 to 15, **characterized in that** the control electronics have at least one interface for configuring their electronic functions, for parameter setting, and/or for fault diagnosis by means of external devices which are designed for the purpose.

17. Sanitary facility according to one of Claims 1 to 16, **characterized in that** the control electronics are in the form of a microcontroller, which has an interface to a bus system or via a network connection, via which the sanitary facility and another similar sanitary facility if any can be connected to units of a central building management system.

18. Sanitary facility according to one of Claims 1 to 17, **characterized in that** its electronic units are switched by the control electronics into an energy-saving mode if the sanitary facility is not operated for a period which is preset in the control electronics, and in this energy-saving mode, essentially only the sensors (3, 4) which function as operating means are switched active.

19. Sanitary facility according to one of Claims 1 to 18, **characterized in that** the water receiving container (1) and the water outlet fitting form a monolithic unit.

## Revendications

1. Installation sanitaire, constituée d'un récipient de collecte d'eau (1) en forme de lavabo, de baignoire, de bassin de douche ou de bidet, comprenant une évacuation d'eau usée (10), d'une robinetterie de sortie d'eau associée, avec une sortie d'eau (2), avant laquelle une conduite d'eau froide et une conduite d'eau chaude du réseau d'alimentation en eau ou d'une installation d'alimentation en eau sont réunies et avec des moyens de commande du débit disposés dans les conduites d'eau pour bloquer, libérer et régler la quantité de débit de l'eau s'écoulant à travers les conduites d'eau vers la sortie d'eau, de moyens (3, 4) pour l'actionnement des moyens de commande du débit, qui sont réalisés par deux moyens d'actionnement en forme de capteurs ou de groupes de capteurs (3, 4) fonctionnant sans contact, avec deux champs de capteurs (5, 6) les entourant, séparés les uns des autres spatialement, à savoir un champ de capteurs respectif (5, 6) par capteur ou groupe de capteurs (3, 4), et d'une électronique de commande, qui analyse les signaux des capteurs pour l'actionnement des moyens de commande du débit, un moyen d'actionnement (3, 4) étant associé fonctionnellement au moyen de commande du débit dans la conduite d'eau froide et un moyen d'actionnement (3, 4) étant associé au moyen de commande du débit dans la conduite d'eau chaude, et un actionnement du moyen de commande ayant lieu, en ce qu'un objet (7), de préférence la main d'une personne, est déplacé à l'intérieur de l'un des champs de capteurs (5, 6), les champs de capteurs (5, 6), sur la base de l'agencement et/ou du type et du réglage des capteurs ou des groupes de capteurs (3, 4) étant réalisés de telle sorte que l'approche d'une personne du récipient de collecte d'eau (1) ne provoque pas un actionnement des moyens de commande du débit, et qu'une variation continue de la température se produise dans le cas d'une conduite d'eau froide et/ou d'eau chaude libérée pour permettre l'écoulement, pendant qu'un objet (7) est présent à chaque fois dans seulement l'un des champs de capteurs (5, 6), en ce que, à la suite de l'analyse du signal de capteur correspondant par l'électronique de commande, le moyen de réglage du débit fonctionnellement associé est commandé pour augmenter la quantité de débit de l'eau s'écoulant à travers la conduite d'eau associée, et simultanément l'autre moyen de commande du débit est commandé pour réduire la quantité de débit de l'eau s'écoulant à travers l'autre conduite d'eau,
**caractérisée en ce que**
les champs de capteurs (5, 6) sont réalisés sur la base de l'agencement et/ou du type et du réglage des capteurs ou des groupes de capteurs de telle sorte que la présence d'un objet (7) se trouvant dans la région d'une bouche de sortie (8) de la sortie d'eau ne provoque pas un actionnement des moyens de commande du débit et qu'un jet d'eau sortant de la sortie d'eau (2) ne soit pas traversé par les champs de capteurs (5, 6) en cas de libération d'une quantité de débit maximale, la quantité de débit de l'eau acheminée par le biais de la sortie d'eau (2) restant constante à l'intérieur d'une plage de tolérance déterminée par les données du réseau d'alimentation ou de l'installation d'alimentation en eau.

2. Installation sanitaire selon la revendication 1, **caractérisée en ce que** les moyens de réglage du débit sont réalisés par deux soupapes réglables en continu et à fonctionnement électrique.

3. Installation sanitaire selon la revendication 1 ou 2, **caractérisée en ce que** les capteurs (3, 4) sont des capteurs optiques.

4. Installation sanitaire selon l'une quelconque des revendications 1 à 3, **caractérisée en ce que,** lorsque les conduites d'eau froid et d'eau chaude sont bloquées, leur libération pour acheminer l'eau a lieu par le biais de la sortie d'eau (2), dans la mesure où simultanément, un objet (7) se trouve dans les champs de capteurs (5 ,6) des deux moyens d'actionnement (3, 4), les moyens de commande du débit étant commandés par l'électronique de commande pour libérer l'eau afin de prendre une valeur de réglage standard, et la quantité de débit et la température de l'eau acheminée se situant à l'intérieur d'une plage de tolérance déterminée par les données du réseau d'alimentation ou de l'installation d'alimentation en eau, par rapport à une valeur préajustée pour ces valeurs dans l'électronique de commande.

5. Installation sanitaire selon la revendication 4, **caractérisée en ce que** les conduites d'eau libérées pour permettre l'écoulement sont à nouveau bloquées dans la mesure où un objet (7) est à nouveau simultanément déplacé dans les champs de capteurs (5, 6) des deux moyens d'actionnement (3, 4).

6. Installation sanitaire selon l'une quelconque des revendications 1 à 3, **caractérisée en ce que** lorsque les conduites d'eau froide et d'eau chaude sont bloquées, leur libération pour acheminer l'eau s'effectue par le biais de la sortie d'eau (2), par le fait qu'un objet (7) est déplacé dans le champ de capteurs (5, 6) de l'un des moyens d'actionnement (3, 4), la quantité de débit et la température de l'eau acheminée se situant à l'intérieur d'une plage de tolérance déterminée par les données du réseau d'alimentation ou de l'installation d'alimentation en eau, par rapport à une valeur préajustée pour ces valeurs dans l'électronique de commande, et une variation de la température de l'eau au moyen du moyen d'actionnement (3, 4) utilisé pour libérer les conduites d'eau n'ayant lieu qu'après qu'un intervalle de temps préajusté dans l'électronique de commande se soit écoulé après la libération des conduites d'eau pour acheminer l'eau, ou après que l'on n'ait détecté temporairement aucun objet (7) au moyen du capteur ou des groupes de capteurs (3, 4) dans le champ de capteurs (5 ,6) du moyen d'actionnement (3, 4) en question.

7. Installation sanitaire selon l'une quelconque des revendications 4 à 6, **caractérisée en ce que** les conduites d'eau libérées pour le passage de l'écoulement sont à nouveau bloquées après un intervalle de temps préajusté dans l'électronique de commande, à l'intérieur duquel aucun objet (7) ne se trouve dans les champs de capteurs (5, 6).

8. Installation sanitaire selon l'une quelconque des revendications 2 à 7, **caractérisée en ce que** les soupapes présentent une information en retour du robinet-vanne, sur la base de laquelle leur dernier état de réglage adopté après une commande des moyens d'actionnement (3, 4) est mémorisé dans l'électronique de commande, de telle sorte que dans le cas d'une nouvelle commande des moyens d'actionnement (3, 4) pour libérer l'eau, se produisant à l'intérieur d'un intervalle de temps prédéfini, les soupapes soient commandées pour adopter cette valeur de réglage tandis qu'elles sont commandées pour adopter la valeur de réglage standard si la commande es moyens d'actionnement (3, 4) a lieu après que cet intervalle de temps soit écoulé.

9. Installation sanitaire selon la revendication 4 ou 6, **caractérisée en ce que**, dans la région entre la réunion de la conduite d'eau chaude avec la conduite d'eau froid et la bouche de sortie (8) de la sortie d'eau (2), on dispose un débitmètre dont le signal est analysé par l'électronique de commande, un circuit de régulation étant formé, et permettant de régler les moyens de commande du débit dans le même sens dans les deux conduites d'eau, dans la mesure où la quantité de débit de l'eau acheminée par le biais de la sortie d'eau (2) se situe en dehors de la tolérance de la valeur préajustée pour elle dans l'électronique de commande.

10. Installation sanitaire selon l'une quelconque des revendications 4 à 9, **caractérisée en ce que** dans la région entre la réunion de la conduite d'eau chaude avec la conduite d'eau froide et la bouche de sortie (8) de la sortie d'eau (2), ou au niveau de la sortie d'eau (2), on dispose un capteur de température, dont le signal est analysé par l'électronique de commande, un circuit de régulation étant formé par le capteur de température et l'électronique de commande, au moyen duquel, si la quantité de débit reste en outre constante, la valeur de température sélectionnée en dernier pour l'eau acheminée est maintenue constante, tant qu'aucun objet (7) ne se trouve dans l'un des champs de capteurs (5, 6).

11. Installation sanitaire selon la revendication 10, **caractérisée en ce que** dans le cas du dépassement d'une valeur maximale prédéterminée pour la température de l'eau, établie au moyen du capteur de température, les conduites d'eau sont bloquées par l'électronique de commande sur la base d'une commande correspondante des moyens de commande de débit disposés dans celles-ci.

12. Installation sanitaire selon l'une quelconque des revendications 1 à 11, **caractérisée en ce que** les champs de capteurs (5, 6) sont réalisés à gauche et à droite de la sortie d'eau (2) et les capteurs ou les groupes de capteurs (3, 4) sont disposés, réalisés et/ou ajustés de telle sorte qu'ils soient activés par des capteurs jusqu'à une distance latérale (d) de 10 cm au maximum depuis le contour extérieur de la sortie d'eau (2), les champs de capteurs (5, 6) s'élargissant en forme de lobes ou de cônes depuis chaque capteur ou depuis le groupe de capteurs respectif (3, 4).

13. Installation sanitaire selon la revendication 1 ou 12, **caractérisée en ce que** les capteurs ou les groupes de capteurs (3, 4) sont disposés à gauche et à droite sur la sortie d'eau (2), les champs de capteurs (5, 6) formant entre les régions de leurs surfaces extérieures imaginaires tournées vers l'ouverture du récipient de collecte d'eau (1) un angle (α) d'au moins 150°, dont la bissectrice coïncide au moins approximativement avec l'axe médian (m) de la sortie d'eau (2).

14. Installation sanitaire selon la revendication 13, **caractérisée en ce que** les capteurs ou les groupes de capteurs (3, 4) font partie d'un insert de bouche de la sortie d'eau (2), l'insert de bouche étant réalisé sous forme d'insert de bouche hybride, qui présente, en plus des composants électroniques sous forme de capteurs (3, 4), également des éléments mécaniques pour former le jet d'eau sortant de la sortie d'eau (2).

15. Installation sanitaire selon la revendication 1 ou 12, **caractérisée en ce que** les capteurs ou les groupes de capteurs (3, 4) sont disposés à gauche et à droite de la sortie d'eau (2) au niveau d'un bord (9) du récipient de collecte d'eau (1) entourant l'ouverture du récipient de collecte d'eau (1) et **en ce que** deux tangentes (t', t"), qui partent du point d'intersection d'une droite de connexion (a) entre les capteurs ou les groupes de capteurs (3, 4) avec l'axe médian (m), projeté sur cette droite de connexion (a), de la sortie d'eau (2), et à l'intérieur des régions tournées vers l'ouverture du récipient de collecte d'eau (1) touchent un point sur la surface extérieure imaginaire de chacun des champs de capteurs (5, 6), forment un angle (β) d'au moins 150°, dont la bissectrice coïncide au moins approximativement avec l'axe médian (m) de la sortie d'eau (2), les champs de capteurs (5, 6) ne se coupant pas avec l'intérieur des distances actives en termes de détection des capteurs ou des groupes de capteurs (3, 4).

16. Installation sanitaire selon l'une quelconque des revendications 1 à 15, **caractérisée en ce que** l'électronique de commande présente au moins une interface pour la configuration de ses fonctions électroniques, pour le paramétrage, et/ou pour le diagnostic d'erreurs, au moyen d'appareils externes réalisés à cet effet.

17. Installation sanitaire selon l'une quelconque des revendications 1 à 16, **caractérisée en ce que** l'électronique de commande est réalisée par un microcontrôleur qui dispose d'une interface avec un système de bus ou d'un raccordement au réseau, par le biais de laquelle ou desquels l'installation sanitaire et éventuellement d'autres installations sanitaires de même type peuvent être connectées à des unités d'un système central de gestion de bâtiments.

18. Installation sanitaire selon l'une quelconque des revendications 1 à 17, **caractérisée en ce que** ses unités électroniques sont commutées par l'électronique de commande dans un mode d'économie d'énergie dans la mesure où l'installation sanitaire n'est pas utilisée pendant une période de temps préréglée dans l'électronique de commande, et dans ce mode d'économie d'énergie, essentiellement seulement les capteurs (3, 4) servant de moyens d'actionnement sont encore connectés.

19. Installation sanitaire selon l'une quelconque des revendications 1 à 18, **caractérisée en ce que** le récipient de collecte d'eau (1) et la robinetterie de sortie d'eau constituent une unité monolithique.
